# EUROPEAN PATENT SPECIFICATION

(11) **EP 4 271 750 B1**
(45) Date of publication and mention of the grant of the patent: **18.02.2026**
(21) Application number: 21915351.7
(22) Date of filing: 27.12.2021
(51) Int. Cl.: C08L 23/26, C08K 3/04, C08L 7/00, C08L 9/00, C08L 23/16, C08L 23/32

(54) **USE OF THIOL-FUNCTIONALIZED EPDM IN RUBBER COMPOSITIONS**
VERWENDUNG VON THIOLFUNKTIONALISIERTEM EPDM IN KAUTSCHUKZUSAMMENSETZUNGEN
UTILISATION D'EPDM À FONCTION THIOL DANS DES COMPOSITIONS DE CAOUTCHOUC

(30) Priority: 31.12.2020 US 202063132540 P
(43) Date of publication of application: 08.11.2023
(73) Proprietor: Bridgestone Corporation, Chuo-Ku Tokyo 104-8340 (JP)
(72) Inventor: KIMURA, Madoka, Tokyo 1048340 (JP)
(74) Representative: Marks & Clerk LLP
(86) International application number: PCT/JP2021/049037
(87) International publication number: WO 2022/145493

(56) References cited:
- WO-A1-2020/196272
- DE-A1- 4 438 712
- JP-A- 2008 174 587
- US-A- 4 647 625
- US-B2- 10 766 703
- SIRQUEIRA ALEX S. ET AL: "Mercapto-modified copolymers in elastomer blends. IV. The compatibilization of natural rubber/EPDM blends", JOURNAL OF APPLIED POLYMER SCIENCE, vol. 83, no. 13, 16 January 2002 (2002-01-16), US, pages 2892 - 2900, XP093216030, ISSN: 0021-8995, DOI: 10.1002/app.10283

## Description

### Technical Field

The present invention relates to a use of thiol-functionalized EPDM in rubber compositions. This international application claims the benefit of U.S. patent appl. no. 63/132,540, filed 31 December 2020.

### Background Art

Rubber goods such as tire components (e.g., treads, sidewalls, etc.) often are made from elastomeric compositions that contain one or more reinforcing materials such as, for example, particulate carbon black and silica. Some of the most commonly employed synthetic elastomeric materials used in the manufacture of vulcanizates such as tire components include high-cis polybutadiene (BR), often made by processes employing catalysts, and substantially random styrene/ butadiene interpolymers (SBR), often made by processes employing anionic initiators.

Good traction and resistance to abrasion are primary considerations for tire treads; however, motor vehicle fuel efficiency concerns argue for a minimization in their rolling resistance, which correlates with a reduction in hysteresis and heat build-up during operation of the tire. These considerations are, to a great extent, competing and somewhat contradictory: treads made from compositions designed to provide good road traction usually exhibit increased rolling resistance and vice versa.

With respect to tire sidewalls, ozone resistance is a primary consideration, but a competing consideration tends to be a desire to reduce overall tire weight (so as to improve automobile mileage). Where the amount of rubber composition used to provide the sidewall component is decreased, however, ozone resistance tends to fall due to the lower amounts of antioxidants present.

Filler(s), polymer(s), and additives typically are chosen so as to provide an acceptable compromise or balance of desired properties. Ensuring that reinforcing filler(s) are well dispersed throughout the elastomeric material(s) both enhances processability and acts to improve physical properties. Dispersion of filler particles can be improved by increasing their interaction with the elastomer(s) and/or decreasing their interaction with each other. Examples of efforts of this type include high temperature mixing in the presence of selectively reactive promoters, surface oxidation of compounding materials, and surface grafting.

The section of a polymer chain from the site of the last crosslink to a terminus is not tied to the macromolecular network and thus cannot be involved in an efficient elastic recovery process. As a result, energy transmitted to this section of the polymer (and vulcanizate in which such polymer is incorporated) is lost as heat. Ensuring that these termini are tied to, or otherwise interact well with, reinforcing particulate fillers, is important to many vulcanizate physical properties such as, for example, reduced hysteresis.

Chemically modifying the polymer, typically at a terminus thereof, is one of the most effective ways of increasing interactivity of fillers and polymers. Terminal chemical modification often occurs by reaction of a living polymer with a functional terminating agent; see, e.g., U.S. Patent Nos. 3,109,871, 4,647,625, 4,677,153, 5,109,907, 6,977,281, etc., as well as references cited therein and later publications citing these patents. Post-polymerization terminal functionalization that can be performed with anionically initiated polymers often cannot be performed on coordination catalyzed polymers and, to a lesser extent, vice versa.

Because ozone resistance is so important in tire sidewalls, interest in the inclusion of ethylene/propylene/diene monomer (EPDM) polymers therein continues. EPDM is known to be highly resistant to ozone (and hence ozone degradation), although its resistance to crack growth is not particular good. The latter sometimes is addressed by use of blends which include EPDM.
Regardless, inclusion of EPDM in such rubber compositions in lieu of another polymer tends to permit reduction of the amounts of antioxidants included in the composition, which is desirable for the aforementioned weight reduction reasons.

With respect to such blends, a problem that can arise relates to affinity for fillers, particularly carbon black. Because EPDM is less polar than polymers with ethylenic unsaturation such as polyisoprene (NR), BR and SBR, carbon black tends to exist preferentially in those phases containing polymers of the latter type. This tends to reduce the physical properties of vulcanizates made from such compositions. DE4438712 discloses a rubber composition for tire sidewalls comprising EPDM, natural rubber and carbon black, which exhibits ozone resistance and low rolling resistance.

That which remains desirable is a cost-effective manner of enhancing the affinity of carbon black for EPDM in rubber compositions containing both EPDM and one or more polymers that include ethylenic unsaturation.

### Disclosure of Invention

### Summary of Invention

Provided herein is a rubber composition that includes a thiol-functionalized EPDM. The thiol functionality provides to the EPDM an enhanced affinity for carbon black fillers. Inclusion of relatively small amounts of such thiol-functionalized EPDM in a rubber composition that includes at least one polymer which includes ethylenic unsaturation, e.g., polydiene(s) permits better dispersion of such fillers, resulting in vulcanizates having desirable properties.

The hysteresis and resistance to crack growth performance of vulcanizates can be simultaneously improved by methods involving modifying the rubber compositions from which such vulcanizates are provided so as to include, in addition to at least carbon black and at least one polymer having ethylenic unsaturation, a thiol-functionalized EPDM.

In these and other aspects, the at least one polymer having ethylenic unsaturation can be BR, NR or a combination of BR and NR.

Additionally or alternatively, the rubber compositions can include non-functionalized EPDM.

Other aspects of the present invention will be apparent to the ordinarily skilled artisan from the detailed description that follows. To assist in understanding that description, certain definitions are provided immediately below, and these are intended to apply throughout unless the surrounding text explicitly indicates a contrary intention:
"polymer" means the polymerization product of one or more monomers and is inclusive of homo-, co-, ter-, tetra-polymers, etc.;
"mer" or "mer unit" means that portion of a polymer derived from a single reactant molecule (e.g., ethylene mer has the general formula -CH₂CH₂-);
"copolymer" means a polymer that includes mer units derived from two reactants, typically monomers, and is inclusive of random, block, segmented, graft, etc., copolymers;
"interpolymer" means a polymer that includes mer units derived from at least two reactants, typically monomers, and is inclusive of copolymers, terpolymers, tetrapolymers, and the like;
"substituted" means one containing a heteroatom or functionality (e.g., hydrocarbyl group) that does not interfere with the intended purpose of the group in question;
"polyene" means a molecule with at least two double bonds located in the longest portion or chain thereof, and specifically is inclusive of dienes, trienes, and the like;
"polydiene" means a polymer that includes mer units from one or more dienes;
"rubber" means a natural and/or synthetic polymer that includes at least 50% (w/w) polyene mer;
"phr" means parts by weight (pbw) per 100 pbw rubber; and
"radical" or "residue" means the portion of a molecule that remains after reacting with another molecule, regardless of whether any atoms are gained or lost as a result of the reaction.

Throughout this document, all values given in the form of percentages are weight percentages (w/w) unless the surrounding text explicitly indicates a contrary intention.

Unless otherwise indicated, all numbers expressing quantities of ingredients, process conditions (e.g., time and temperature), and the like are to be understood as inherently including the term "about." Recited numerical limitations include an appropriate degree of precision based on the number of significant places used; for example, "up to 5.0" can be read as setting a lower absolute ceiling than "up to 5."

### Description of Embodiments

Both synthetic and natural rubber may be employed within the vulcanizable rubber compositions of the present invention.

These rubbers include without limitation natural or synthetic polyisoprene, with NR being preferred, and homo- and interpolymers of polyenes, particularly dienes and most particularly conjugated dienes. Exemplary conjugated dienes include 1,3-butadiene, 2-methyl-1,3-butadiene, 2,3-dimethyl-1,2-butadiene, 1,3-pentadiene, 1,3-hexadiene and the like, with 1,3-butadiene being particularly preferred. Those polydienes, e.g., BR, having a 1,2-vinyl content of no more than 3% and a cis-1,4 content of at least 96 are preferred. A BR having up to ~12% 1,2-content also can be used with appropriate adjustments in the level of other components. (In this paragraph, all percentages are molar, such percentages being determined by various spectroscopic techniques.)

Interpolymers of conjugated diene monomers with at least one mono-olefin also can be included. Potentially useful mono-olefinic monomers include vinyl aromatic compounds (e.g., styrene, α-methyl styrene, vinyl naphthalene, vinyl pyridine, and the like) and α-olefins (e.g., ethylene and propylene), as well as mixtures of the foregoing. Such interpolymers can contain up to 50%, preferably no more than ~35% (both w/w), of mono-olefin mer. A preferred interpolymer of this type is SBR.

The rubber composition also can contain, and in certain embodiments preferably does contain, EPDM. Any of a variety of grades, differing in terms of molecular weights, ethylene vs. propylene mer contents, particular type of diene monomer, etc., can be employed.

Any other polymer which does not interfere with the ability of the resulting rubber composition to provide a vulcanizate having desired physical properties can be employed in appropriate amounts. Non-limiting examples include butyl rubber, neoprene, EPR, acrylonitrile/butadiene rubber, silicone rubber, fluoroelastomers, ethylene/acrylic rubber, EVA, epichlorohydrin rubbers, chlorinated polyethylene rubbers, chlorosulfonated polyethylene rubbers, hydrogenated nitrile rubber, tetrafluoroethylene/propylene rubber, and the like.

In addition to the foregoing, a rubber composition according to the present invention includes an effective amount of a thiol-functionalized EPDM. This particular type of functionalized polymer can be more particularly described as the hydrolyzed reaction product of EPDM and thioacetic acid. In the functionalized EPDM, the portion resulting from the diene monomer residue includes an alkyl group side chain which, in turn, includes a thiol group.

The functionalized EPDM can be provided according to the process described in M.G. Oliveira et al., "Functionalization of EPDM with mercapto groups and its use in NBR/ EPDM blends," Macromol. Rapid Commun. 20, pp. 526-31 (1999, Wiley-VCH Verlag GmbH; Weinheim, Germany). The overall reaction scheme involves two steps. In the first step, the remaining ethylenic unsaturation of the diene monomer radical is reacted with thioacetic acid in the presence of a free radical generator such as 2,2'-azobis(2-methylpropionitrile) (AIBN). The product of the first step then is hydrolyzed so as to replace the CH₃C(O) moiety bonded to the S atom with a H atom, thereby providing a thiol moiety.

The total amount of non-functionalized and functionalized EPDM in the rubber composition generally constitutes from ~10 to ~60%, commonly from ~13 to ~52%, typically from ~16 to ~48%, preferably from ~18 to ~45%, and more preferably from ~20 to ~35% of the total amount of polymers. Within the broadest of the foregoing ranges, preferred upper limits ~50%, ~40% and ~30%.

The amount of functionalized EPDM need not constitute a large percentage of the total amount of EPDM present; the effect of even a small amount of functionalized EPDM in the rubber composition can provide significant performance benefits to vulcanizates made therefrom. The molar ratio of the functionalized EPDM relative to non-functionalized EPDM generally ranges from 1:50 to 2:1, commonly from 1:25 to 3:2, typically from 1:5 to 4:3, and preferably from 1:2 to 1:1.

Polymers of the types described above can be compounded with, inter alia, reinforcing fillers. Elastomeric compounds typically are filled to a volume fraction, which is the total volume of filler(s) added divided by the total volume of the elastomeric stock, often ~25%; typical (combined) amounts of reinforcing fillers range from ~30 to ~100 phr, with the upper end of the range being defined largely by how effectively processing equipment can handle the increased viscosities imparted when such fillers are employed.

Useful fillers include various forms of carbon black including, but not limited to, furnace black, channel blacks and lamp blacks. More specifically, examples of the carbon blacks include super abrasion furnace blacks, high abrasion furnace blacks, fast extrusion furnace blacks, fine furnace blacks, intermediate super abrasion furnace blacks, semi-reinforcing furnace blacks, medium processing channel blacks, hard processing channel blacks, conducting channel blacks, and acetylene blacks; mixtures of two or more of these can be used. Carbon blacks having a surface area (EMSA) of at least 20 m²/g, preferably at least about 35 m²/g, are preferred; see ASTM D-1765 for methods of determining surface areas of carbon blacks. The carbon blacks may be in pelletized form or an unpelletized flocculent mass, although unpelletized carbon black can be preferred for use in certain mixers.

The amount of carbon black can be up to ~50 phr, with ~5 to ~40 phr being typical.

Amorphous silica (SiO₂) also can be utilized as a filler. Silicas are generally classified as wet-process, hydrated silicas because they are produced by a chemical reaction in water, from which they are precipitated as ultrafine, spherical particles. These primary particles strongly associate into aggregates, which in turn combine less strongly into agglomerates. "Highly dispersible silica" is any silica having a very substantial ability to de-agglomerate and to disperse in an elastomeric matrix, which can be observed by thin section microscopy.

Surface area gives a reliable measure of the reinforcing character of different silicas; the Brunauer, Emmet and Teller ("BET") method (described in J. Am. Chem. Soc., vol. 60, p. 309 et seq.) is a recognized method for determining surface area. BET surface areas of silicas generally are less than 450 m²/g, commonly from ~32 to ~400 m²/g or from ~100 to ~250 m²/g or from ~150 to ~220 m²/g.

The pH of the silica filler (when used) is generally from ~5 to ~7 or slightly higher, preferably from ~5.5 to ~6.8.

When silica is employed, a coupling agent such as a silane often is added so as to ensure good mixing in, and interaction with, the elastomer(s). Generally, the amount of silane that is added ranges between about 4 and 20%, based on the weight of silica filler present in the elastomeric compound. Coupling agents can have a general formula of A-T-G, in which A represents a functional group capable of bonding physically and/or chemically with a group on the surface of the silica filler (e.g., surface silanol groups); T represents a hydrocarbon group linkage; and G represents a functional group capable of bonding with the elastomer (e.g., via a sulfur-containing linkage). Such coupling agents include organosilanes, in particular polysulfurized alkoxysilanes (see, e.g., U.S. Pat. Nos. 3,873,489, 3,978,103, 3,997,581, 4,002,594, 5,580,919, 5,583,245, 5,663,396, 5,684,171, 5,684,172, 5,696,197, etc.) or polyorganosiloxanes bearing the G and A functionalities mentioned above. Addition of a processing aid can be used to reduce the amount of silane employed; see, e.g., U.S. Pat. No. 6,525,118 for a description of fatty acid esters of sugars used as processing aids. Additional fillers useful as processing aids include, but are not limited to, mineral fillers, such as clay (hydrous aluminum silicate), talc (hydrous magnesium silicate), and mica as well as non-mineral fillers such as urea and sodium sulfate. Exemplary micas contain principally alumina, silica and potash, although other variants can be used. Additional fillers can be utilized in an amount of up to ~40 phr, typically up to ~20 phr.

Silica commonly is employed in amounts up to ~100 phr, typically in an amount from ~5 to ~80 phr. When carbon black also is present, the amount of silica can be decreased to as low as ~1 phr; as the amount of silica decreases, lesser amounts of the processing aids, plus silane if any, can be employed.

One or more non-conventional fillers having relatively high interfacial free energies, i.e., surface free energy in water values (ypl) can be used in conjunction with or in place of carbon black and/or silica. The term "relatively high" can be defined or characterized in a variety of ways such as, e.g., greater than that of the water-air interface, preferably several multiples (e.g., at least 2×, at least 3× or even at least 4x) of this value; at least several multiples (e.g., at least 2×, at least 3x, at least 4×, at least 5×, at least 6×, at least 7×, at least 8x, at least 9× or even at least 10×) of the γₚ₁ value for amorphous silica; in absolute terms such as, e.g., at least ~300, at least ~400, at least ~500, at least ~600, at least ~700, at least ~750, at least ~1000, at least ~1500, and at least ~2000 mJ/m². Non-limiting examples of naturally occurring materials with relatively high interfacial free energies include F-apatite, goethite, hematite, zincite, tenorite, gibbsite, quartz, kaolinite, all forms of pyrite, and the like. Certain synthetic complex oxides also can exhibit this type of high interfacial free energy.

The foregoing types of materials typically are more dense than either carbon black or amorphous silica; thus, replacing a particular mass of carbon black or silica with an equal mass of a non-conventional filler typically will result in a much smaller volume of overall filler being present in a given compound. Accordingly, replacement typically is made on an equal volume, as opposed to equal weight, basis.

Other conventional rubber additives also can be added. These include, for example, process oils, plasticizers, anti-degradants such as antioxidants and antiozonants, curing agents and the like. Advantageously, rubber compositions according to the present invention need not include as much antioxidant/antiozonant to provide vulcanizates with appropriate levels of ozone resistance.

All ingredients can be mixed with standard equipment such as, e.g., Banbury or Brabender mixers. Typically, mixing occurs in two or more stages. During the first stage (often referred to as the masterbatch stage), mixing typically is begun at temperatures of ~120° to ~130°C and increases until a socalled drop temperature, typically ~165°C, is reached.

Where a formulation includes fillers other than or in addition to carbon black, a separate re-mill stage often is employed for separate addition of the silane component(s). This stage often is performed at temperatures similar to, although often slightly lower than, those employed in the masterbatch stage, i.e., ramping from ~90°C to a drop temperature of ~150°C.

Reinforced rubber compounds conventionally are cured with ~0.2 to ~5 phr of one or more known vulcanizing agents such as, for example, sulfur or peroxide-based curing systems. For a general disclosure of suitable vulcanizing agents, the interested reader is directed to an overview such as that provided in Kirk-Othmer, Encyclopedia of Chem. Tech., 3d ed., (Wiley Interscience, New York, 1982), vol. 20, pp. 365-468. Vulcanizing agents, accelerators, etc., are added at a final mixing stage. To reduce the chances of undesirable scorching and/or premature onset of vulcanization, this mixing step often is done at lower temperatures, e.g., starting at ~60° to ~65°C and not going higher than ~105° to ~110°C.

Subsequently, the compounded mixture is processed (e.g., milled) into sheets prior to being formed into any of a variety of components and then vulcanized, which typically occurs at ~5° to ~15°C higher than the highest temperatures employed during the mixing stages, most commonly ~170°C.

### Process embodiments

P1. A process for simultaneously improving the hysteresis and resistance to crack growth performance of a vulcanizate prepared from a rubber composition that comprises (a) carbon black and (b) at least one polymer that comprises ethylenic unsaturation, said process comprising including in said rubber composition (c) the hydrolyzed reaction product of EPDM and thioacetic acid.
P2. A process for simultaneously improving the hysteresis and resistance to crack growth performance of a vulcanizate prepared from a rubber composition that comprises (a) carbon black and (b) at least one polymer that comprises ethylenic unsaturation, said process comprising including in said rubber composition (c) a functionalized EPDM, wherein the portion of said functionalized EPDM resulting from diene monomer residue comprises an alkyl group side chain that comprises a thiol group.
P3. The process of P1 or P2 wherein said at least one polymer that comprises ethylenic unsaturation comprises polybutadiene.
P4. The process of any of P1 to P3 wherein said at least one polymer that comprises ethylenic unsaturation comprises polyisoprene.
P5. The process of any of P1 to P4 wherein said rubber composition further comprises a non-functionalized EPDM.
P6. The process of P5 wherein the molar ratio of component (c) relative to said non-functionalized EPDM is from 1:200 to 1:20.
P7. The process of P6 wherein said molar ratio is from 1:150 to 1:25.
P8. The process of P7 wherein said molar ratio is from 1:125 to 1:33.
P9. The process of P5 wherein the molar ratio of component (c) relative to said non-functionalized EPDM is from 1:50 to 2:1.
P10. The process of P9 wherein said molar ratio is from 1:25 to 3:2.
P11. The process of P10 wherein said molar ratio is from 1:5 to 4:3.
P12. The process of P11 wherein said molar ratio is from 1:2 to 1:1.
P13. The process of any of P1 to P12 wherein the total amount of EPDM constitutes at least 10 weight percent of all polymers in said composition.
P14. The process of P13 wherein the total amount of EPDM constitutes no more than 40 weight percent of all polymers in said composition.
P15. The process of any of P1 to P14 further comprising vulcanizing said rubber composition.

### Rubber compound embodiments

R1. A rubber composition comprising (a) carbon black, (b) at least one polymer that comprises ethylenic unsaturation, and (c) the hydrolyzed reaction product of EPDM and thioacetic acid.
R2. A rubber composition comprising (a) carbon black, (b) at least one polymer that comprises ethylenic unsaturation, and (c) a functionalized EPDM, wherein the portion of said functionalized EPDM resulting from diene monomer residue comprises an alkyl group side chain that comprises a thiol group.
R3. The rubber composition of R1 or R2 wherein said at least one polymer that comprises ethylenic unsaturation comprises polybutadiene.
R4. The rubber composition of any of R1 to R3 wherein said at least one polymer that comprises ethylenic unsaturation comprises polyisoprene.
R5. The rubber composition of any of R1 to R4 further comprising a non-functionalized EPDM.
R6. The rubber composition of R5 wherein the molar ratio of component (c) relative to said non-functionalized EPDM is from 1:200 to 1:20.
R7. The rubber composition of R6 wherein said molar ratio is from 1:150 to 1:25.
R8. The rubber compositions of R7 wherein said molar ratio is from 1:125 to 1:33.
R9. The rubber composition of R5 wherein the molar ratio of component (c) relative to said non-functionalized EPDM is from 1:50 to 2:1.
R10. The rubber composition of R9 wherein said molar ratio is from 1:25 to 3:2.
R11. The rubber composition of R10 wherein said molar ratio is from 1:5 to 4:3.
R12. The rubber composition of R11 wherein said molar ratio is from 1:2 to 1:1.
R13. The rubber composition of any of R1 to R12 wherein the total amount of EPDM constitutes at least 10 weight percent of all polymers in said composition.
R14. The rubber composition of R13 wherein the total amount of EPDM constitutes no more than 40 weight percent of all polymers in said composition.

Also contemplated are vulcanizates provided from any of R1 to R14.

The following non-limiting, illustrative examples provide detailed conditions and materials that can be useful in the practice of the present invention. These examples employ 1,3-butadiene as an exemplary polyene due to a variety of factors including cost, availability, ability to handle and, most importantly, ability to make internal comparisons as well as comparisons against previously reported polymers.

### Examples

Molecular weight values (all in kg/mol) of the polymer samples were determined by GPC, with THF as a solvent and calibrated with a series of polystyrene standards.

### Example 1: EPDM functionalization

To a glass bottle with 10 g EPDM, purged with N₂ for 30 minutes, was added 217 g toluene. After standing overnight, the bottle was agitated for ~2 hours at 70°C.

To a glass vial were added 2 mL thioacetic acid, 110 mg AIBN, and 10 mL toluene. The vial was purged by N₂ bubbling of for 20 minutes.

The entire contents of the glass vial were charged into the glass bottle before the latter was agitated at 70°C for ~5 hours.

The resulting polymer cement was coagulated in a solution of isopropanol and washed twice with more isopropanol. The polymer cement was dried in a vacuum oven at 40°C for 3 hours (64.4% yield).

### Example 2: Hydrolysis

A glass bottle with 15 g of the polymer from Example 1 was purged with N₂ for 30 minutes before 400 g toluene was added. After standing overnight, the bottle was agitated for ~3 hours at 50°C.

To a glass vial, 0.32 g NaOH and 50 mL methanol were added before the vial was purged with N₂ for 15 minutes.

Some of the contents of the glass vial were added to the glass bottle in the following manner: drip addition of 1 mL, wait ~25 minutes, drip addition of 2 mL.

Approximately 2 hours after the first of the aforedescribed additions, 2 mL of 1M HCl was dripped into the bottle.

The resulting polymer cement was coagulated in a solution of isopropanol and washed twice with more isopropanol. The polymer cement was dried in a vacuum oven at room temperature for 6 hours.

The resulting thiol-grafted polymer was determined to have a Mₙ of ~133 kg/mol, a MWD of 2.64, and an amount of grafting of 2.1% (*w*/*w*).

### Examples 3-6: Rubber Compositions and Vulcanizates

Each of the rubber compositions described below was produced using a 90 cc Toyoseiki^{™} mixer. The pre-masterbatch and masterbatch stages were prepared at 160°C and 70 rpm for 3 minutes, while the final stage was mixed at 80°C and 50 rpm for 1 minute. (The EPDM and high cis BR used are both commercially available materials.)

The additive packages in the Masterbatch stage for each of Examples 3-6 were identical.

In the final stage (not included in Table 1 below), the same amount of sulfur was added to each, but the amounts of the other additives, including antioxidant(s), was reduced by 30% for Examples 5-6 relative to Examples 3-4.

The amounts for the pre-masterbatch stage components are pbw, while those in the masterbatch stage are in phr.

**Table 1: Composition for vulcanizates, carbon black filler**

| ***Pre-masterbatch*** | ***A*** | ***B*** | | |
|---|---|---|---|---|
| EPDM | 33 | 50 | | |
| Example 2 polymer | 42 | 50 | | |
| oil | 100 | 100 | | |
| carbon black | 43 | 43 | | |

| ***Masterbatch*** | **3** | **4** | **5** | **6** |
|---|---|---|---|---|
| NR | 30 | 30 | 30 | 30 |
| BR | 50 | 40 | 50 | 40 |
| EPDM | 20 | 30 | | |
| *A* from above | | | 63 | |
| *B* from above | | | | 73 |
| carbon black | 60 | 60 | 30 | 30 |
| oil | 13 | 13 | | |

Green rubber was cured at 160°C to prepare specimens for physical testing, the results of which are tabulated immediately below, with each numerical value being relative to the same data gathered on the Example 3 vulcanizate, i.e., indexed to Example 3. (The dc/dn property is an indicator of resistance to crack growth, typically strongly correlated to the amount of EPDM. For the tan δ properties, lower is better, so a higher index value indicates that a lower absolute value was obtained relative to that of the vulcanizate of Example 3.)

**Table 2: Physical Properties of Vulcanizates (indexed)**

| | **4** | **5** | **6** |
|---|---|---|---|
| Δ tan δ | 92 | 140 | 146 |
| 10% tan δ | 96 | 105 | 103 |
| dc/dn | 36 | 182 | 49 |

Typically, a decrease in hysteresis performance correlates with a reduction in resistance to crack growth, i.e., one must be willing to accept poorer results in one to obtain better results in the other. However, the vulcanizate of Example 5 clearly outperformed the vulcanizate of Example 3, and, similarly, the vulcanizate of Example 6 clearly outperformed the vulcanizate of Example 4. (The amounts of EPDM in Examples 3 and 5 are the same, as are the amounts in Examples 4 and 6.) Thus, vulcanizates containing a functionalized EPDM according to the present invention can exhibit better hysteresis and crack growth resistance than vulcanizates not containing a functionalized EPDM.

## Claims

1. A rubber composition comprising
a) carbon black,
b) at least one polymer that comprises ethylenic unsaturation, and
c) a functionalized EPDM, wherein a portion of said functionalized EPDM resulting from diene monomer residue comprises an alkyl side chain that comprises a thiol group.

2. The rubber composition of claim 1 wherein said functionalized EPDM is a hydrolyzed reaction product of EPDM and thioacetic acid.

3. The rubber composition of claim 1 or claim 2 wherein said at least one polymer that comprises ethylenic unsaturation comprises polybutadiene.

4. The rubber composition of claim 3 wherein said at least one polymer that comprises ethylenic unsaturation further comprises polyisoprene.

5. The rubber composition of claim 3 or claim 4 further comprising a non-functionalized EPDM.

6. The rubber composition of claim 1 or claim 2 wherein said at least one polymer that comprises ethylenic unsaturation comprises polyisoprene.

7. The rubber composition of claim 6 further comprising a non-functionalized EPDM.

8. The rubber composition of any of claim 1 or claim 2 further comprising a non-functionalized EPDM.

9. The rubber composition of claim 8 wherein a molar ratio of component (c) relative to said non-functionalized EPDM is from 1:125 to 1:33.

10. The rubber composition of claim 8 wherein a total amount of EPDM constitutes at least 10 weight percent of all polymers in said composition.

11. The rubber composition of claim 10 wherein the total amount of EPDM constitutes no more than 40 weight percent of all polymers in said composition.

12. The rubber composition of claim 1 or claim 2 wherein a total amount of EPDM constitutes at least 10 weight percent of all polymers in said composition.

13. A method for simultaneously improving hysteresis and resistance to crack growth performance of a vulcanizate prepared from a rubber composition that comprises carbon black and at least one polymer that comprises ethylenic unsaturation, said method comprising including in said rubber composition a functionalized EPDM, wherein a portion of said functionalized EPDM resulting from diene monomer residue comprises an alkyl side chain that comprises a thiol group.

14. The method of claim 13 wherein said functionalized EPDM is a hydrolyzed reaction product of EPDM and thioacetic acid.

15. The method of any of claim 13 or claim 14 wherein said at least one polymer that comprises ethylenic unsaturation comprises one or more of polybutadiene and polyisoprene.

## Patentansprüche

1. Kautschukzusammensetzung, umfassend
a) Kohlenschwarz,
b) mindestens ein Polymer, das ethylenische Ungesättigtheit umfasst, und
c) ein funktionalisiertes EPDM, wobei ein Anteil des funktionalisierten EPDM, der aus Dienmonomerresten resultiert, eine Alkyl-Seitenkette umfasst, die eine Thiol-Gruppe umfasst.

2. Kautschukzusammensetzung nach Anspruch 1, wobei das funktionalisierte EPDM ein hydrolysiertes Reaktionsprodukt von EPDM und Thioessigsäure ist.

3. Kautschukzusammensetzung nach Anspruch 1 oder 2, wobei das mindestens eine Polymer, das ethylenische Ungesättigtheit umfasst, Polybutadien umfasst.

4. Kautschukzusammensetzung nach Anspruch 3, wobei das mindestens eine Polymer, das ethylenische Ungesättigtheit umfasst, ferner Polyisopren umfasst.

5. Kautschukzusammensetzung nach Anspruch 3 oder 4, ferner umfassend ein nicht-funktionalisiertes EPDM.

6. Kautschukzusammensetzung nach Anspruch 1 oder 2, wobei das mindestens eine Polymer, das ethylenische Ungesättigtheit umfasst, Polyisopren umfasst.

7. Kautschukzusammensetzung nach Anspruch 6, ferner umfassend ein nicht-funktionalisiertes EPDM.

8. Kautschukzusammensetzung nach einem der Ansprüche 1 oder 2, ferner umfassend ein nicht-funktionalisiertes EPDM.

9. Kautschukzusammensetzung nach Anspruch 8, wobei ein Molverhältnis von Komponente (c) bezogen auf das nicht-funktionalisierte EPDM von 1 : 125 bis 1 : 33 beträgt.

10. Kautschukzusammensetzung nach Anspruch 8, wobei eine Gesamtmenge an EPDM mindestens 10 Gewichtsprozent aller Polymere in der Zusammensetzung ausmacht.

11. Kautschukzusammensetzung nach Anspruch 10, wobei die Gesamtmenge an EPDM nicht mehr als 40 Gewichtsprozent aller Polymere in der Zusammensetzung ausmacht.

12. Kautschukzusammensetzung nach Anspruch 1 oder 2, wobei eine Gesamtmenge an EPDM mindestens 10 Gewichtsprozent aller Polymere in der Zusammensetzung ausmacht.

13. Verfahren zum gleichzeitigen Verbessern einer Hysterese und einer Widerstandsfähigkeit gegen Risswachstumsleistung eines Vulkanisats, das aus einer Kautschukzusammensetzung hergestellt wird, die Kohlenschwarz und mindestens ein Polymer umfasst, das ethylenische Ungesättigtheit umfasst, das Verfahren umfassend ein Einschließen eines funktionalisierten EPDM in die Kautschukzusammensetzung, wobei ein Anteil des funktionalisierten EPDM, der aus Dienmonomerresten resultiert, eine Alkylseitenkette umfasst, die eine Thiolgruppe umfasst.

14. Verfahren nach Anspruch 13, wobei das funktionalisierte EPDM ein hydrolysiertes Reaktionsprodukt von EPDM und Thioessigsäure ist.

15. Verfahren nach einem der Ansprüche 13 oder 14, wobei das mindestens eine Polymer, das ethylenische Ungesättigtheit umfasst, eines oder mehrere von Polybutadien und Polyisopren umfasst.

## Revendications

1. Composition de caoutchouc comprenant
a) du noir de carbone,
b) au moins un polymère qui comprend une insaturation éthylénique, et
c) un EPDM fonctionnalisé, dans laquelle une partie dudit EPDM fonctionnalisé résultant d'un résidu de monomère diène comprend une chaîne latérale alkyle qui comprend un groupe thiol.

2. Composition de caoutchouc selon la revendication 1, dans laquelle ledit EPDM fonctionnalisé est un produit de réaction hydrolysé d'EPDM et d'acide thioacétique.

3. Composition de caoutchouc selon la revendication 1 ou la revendication 2, dans laquelle ledit au moins un polymère qui comprend une insaturation éthylénique comprend du polybutadiène.

4. Composition de caoutchouc selon la revendication 3, dans laquelle ledit au moins un polymère qui comprend une insaturation éthylénique comprend en outre du polyisoprène.

5. Composition de caoutchouc selon la revendication 3 ou la revendication 4, comprenant en outre un EPDM non fonctionnalisé.

6. Composition de caoutchouc selon la revendication 1 ou la revendication 2, dans laquelle ledit au moins un polymère qui comprend une insaturation éthylénique comprend du polyisoprène.

7. Composition de caoutchouc selon la revendication 6, comprenant en outre un EPDM non fonctionnalisé.

8. Composition de caoutchouc selon l'une quelconque de la revendication 1 ou de la revendication 2, comprenant en outre un EPDM non fonctionnalisé.

9. Composition de caoutchouc selon la revendication 8, dans laquelle un rapport molaire du composant (c) par rapport audit EPDM non fonctionnalisé va de 1:125 à 1:33.

10. Composition de caoutchouc selon la revendication 8, dans laquelle une quantité totale d'EPDM constitue au moins 10 pour cent en poids de tous les polymères dans ladite composition.

11. Composition de caoutchouc selon la revendication 10, dans laquelle la quantité totale d'EPDM ne constitue pas plus de 40 pour cent en poids de tous les polymères dans ladite composition.

12. Composition de caoutchouc selon la revendication 1 ou la revendication 2, dans laquelle une quantité totale d'EPDM constitue au moins 10 pour cent en poids de tous les polymères dans ladite composition.

13. Procédé d'amélioration simultanée d'hystérésis et de résistance aux performances de croissance de fissures d'un vulcanisat préparé à partir d'une composition de caoutchouc qui comprend du noir de carbone et au moins un polymère qui comprend une insaturation éthylénique, ledit procédé comprenant l'inclusion dans ladite composition de caoutchouc d'un EPDM fonctionnalisé, dans lequel une partie dudit EPDM fonctionnalisé résultant d'un résidu de monomère diène comprend une chaîne latérale alkyle qui comprend un groupe thiol.

14. Procédé selon la revendication 13, dans lequel ledit EPDM fonctionnalisé est un produit de réaction hydrolysé d'EPDM et d'acide thioacétique.

15. Procédé selon l'une quelconque de la revendication 13 ou de la revendication 14, dans lequel ledit au moins un polymère qui comprend une insaturation éthylénique comprend l'un ou plusieurs parmi le polybutadiène et le polyisoprène.
